# EUROPÄISCHE PATENTSCHRIFT

(11) **EP 2 181 474 B1**
(45) Veröffentlichungstag und Bekanntmachung des Hinweises auf die Patenterteilung: **23.05.2012**
(21) Anmeldenummer: 08735367.8
(22) Anmeldetag: 23.04.2008
(51) Int. Cl.: H01M 8/02

(54) **BIPOLARPLATTE FÜR BRENNSTOFFZELLEN**
BIPOLAR PLATE FOR FUEL CELLS
PLAQUE BIPOLAIRE POUR PILES À COMBUSTIBLE

(30) Priorität: 24.05.2007 DE 102007024161
(43) Veröffentlichungstag der Anmeldung: 05.05.2010
(73) Patentinhaber: Daimler AG, 70327 Stuttgart (DE)
(72) Erfinder: FINSTERWALDER, Florian, 89171 Illerkirchberg (DE); KLEEMANN, Jörg, 89073 Ulm (DE); KUNICK, Thomas, 89171 Illerkirchberg (DE); SCHUDY, Markus, 89075 Ulm (DE)
(74) Vertreter: JENSEN & SON
(86) Internationale Anmeldenummer: PCT/EP2008/003240
(87) Internationale Veröffentlichungsnummer: WO 2008/141713

(56) Entgegenhaltungen:
- EP-A- 1 596 454
- WO-A-03/096457
- DE-A1-102005 020 332
- DE-U1- 20 308 332

## Beschreibung

Die Erfindung betrifft Bipolarplatten für Brennstoffzellensysteme, sowie Verfahren zur Herstellung derartiger Bipolarplatten.

Brennstoffzellen wandeln chemische Energie in elektrische Energie um. Die Nutzung von Brennstoffzellen für mobile und stationäre Energieversorgung wird aktuell zunehmend ausgebaut. Insbesondere wird die Entwicklung von elektrisch betriebenen Kraftfahrzeugen aus ökologischen Gründen vorangetrieben. Dabei sind leistungsstarke Brennstoffzellen bei möglichst geringem Volumen und Gewicht von zentraler Bedeutung.

Derzeit existieren unterschiedliche Typen von Brennstoffzellen, deren Wirkungsprinzip allgemein auf der elektrochemischen Rekombination von Wasserstoff und Sauerstoff zum Endprodukt Wasser basiert. Sie lassen sich nach Art des verwendeten leitfähigen Elektrolyten, dem Betriebstemperaturniveau und realisierbaren Leistungsbereichen einordnen. Für automobile Anwendungen sind Polymer-Elektrolyt-Membran-(PEM)-Brennstoffzellen besonders geeignet. In einer solchen PEM-Brennstoffzelle wird die elektrochemische Reaktion von Wasserstoff mit Sauerstoff zu Wasser durch die Einfügung einer protonenleitenden Membran zwischen die Anoden- und Kathodenelektrode in die beiden Teilreaktionen Oxidation und Reduktion separiert. PEM-Brennstoffzellen werden üblicherweise bei einer Temperatur im Bereich von 50 °C bis 90 °C betrieben.

Da die elektrische Spannung einer einzelnen Brennstoffzelle für praktische Anwendungen zu niedrig ist, werden für leistungsstarke Systeme Brennstoffzellen analog zur Serienschaltung von Batterien zu einem Stapel (Stack) aus mehreren aneinander gesetzten Einzelzellen zusammengeschaltet, wobei zwischen den einzelnen Brennstoffzellen jeweils Bipolarplatten angeordnet sind. Die Bipolarplatten erfüllen dabei mehrere Aufgaben: Hauptfunktion ist die elektrische Kontaktierung der Elektroden der einzelnen elektrochemischen Zellen bzw. Brennstoffzellen und Weiterleitung des Stroms zur benachbarten Brennstoffzelle. Hinzu kommt die Versorgung der Brennstoffzellen einerseits mit wasserstoffhaltigen Reaktionsgasen und andererseits mit Sauerstoff (Luft) und Abtransport der Reaktionsprodukte (Wasser) über eine entsprechende Verteilerstruktur (Bildung von Transportkanälen über den Elektroden). Darüber hinaus ist die kontinuierlich Ableitung der Reaktionswärme über die Bipolarplatten aus dem Stack heraus sehr wichtig, da eine Überhitzung über den o.g. Betriebstemperaturbereich schnell zur irreparablen Schädigung des ganzen Brennstoffzellenstapels führen kann.

Um das dargelegte Anforderungsprofil zu erfüllen, muss eine Bipolarplatte folgende Eigenschaften erfüllen:
- hohe elektrische Leitfähigkeit;
- geringe Übergangswiderstände;
- chemische Beständigkeit gegen feuchte, oxidierende und reduzierende Reaktanden;
- Gasdichtheit;
- mechanische Belastbarkeit;
- Maßhaltigkeit;
- geringes Gewicht.

Hauptziele bei der Weiterentwicklung der PEM-Brennstoffzelle sind die Senkung der Produktionskosten und die Erhöhung der Leistungsdichte der Aggregate. Durch Skaleneffekte bei der Ausweitung der Produktionskapazität alleine kann das notwendige Kostensenkungspotential nicht erreicht werden. Dringend notwendig ist auch besonders der Einsatz kostengünstiger, leicht zu verarbeitender Materialien.

Im Hinblick auf die Gasdiffusionslage (gas-diffusion-layer, GDL) werden diese Eigenschaften von rollbaren, so genannten "low cost"-GDLs auf Vlies-, Gewebe- oder Papierbasis erfüllt. Durch ihre spezifischen Materialeigenschaften weisen rollbare Gasdiffusionslagen, z.B. Gewebe oder Wirrvliese, beim Zellaufbau und im Zellbetrieb ein anderes Verhalten auf als bisher verbreitete, thermisch gebundene Papiere. So zeigen sie durch ihre vergleichsweise geringe Steifigkeit eine deutlich verringerte Kompression in den Kanalbereichen des Flussfeldes, was in Folge des Materialaufbaus zu erhöhten elektrischen Widerständen im Material und an den Grenzflächen zu benachbarten Schichten führt. Als Folge dieser Effekte steigt der ohmsche Widerstandsverlust innerhalb der Brennstoffzelle und die Zellleistung sinkt. Dieser Effekt kann drastisch vermindert werden, indem eine angepasste filigrane Steg-Kanal-Struktur mit deutlich reduzierter Abstandsbreite im Flussfeld verwendet wird.

Bekannt sind u.a. Bipolarplatten aus graphitischen Werkstoffen. Vorteilhaft sind ihre hohe Korrosionsbeständigkeit, sowie geringe Übergangswiderstände und eine geringe Materialdichte. Graphit hat den Nachteil, dass die Bipolarplatten einzeln (und daher teuer) mit aufwändigen Verfahren verarbeitet werden müssen. Mechanisch sind diese Bipolarplatten sehr anfällig gegen Zugspannungen, was die Auswahl der Formgebungsverfahren stark einschränkt. Aufgrund der Sprödigkeit von graphitischen Materialien ist zudem in automobilen Anwendungen zumeist die mechanische Belastbarkeit unzureichend.

Alternativ werden daher bevorzugt Bipolarplatten aus Metall geringer Korrosionsanfälligkeit gefertigt, z.B. aus Edelstahl, Titan, Nickel. Derartige metallische Bipolarplatten zeichnen sich durch hohe elektrische Leitfähigkeit, mechanische Stabilität, Maßhaltigkeit und hohe Gasdichtigkeit aus. Auch in Hinblick auf das Flussfeld der Brennstoffzelle eignet sich vorzugsweise eine metallische, geprägte zweiteilige Bipolarplatte kosten- und fertigungsmäßig am ehesten für einen Serienprozess. Weiterhin ermöglicht sie durch die dünne Bauform äußerst hohe Leistungsdichten.

Zur Herstellung einer metallischen Bipolarplatte mit zusätzlicher Kühlfunktion können zwei Metallbleche mit einem korrespondierenden Profil so geprägt werden, dass beim flächigen Zusammenlegen der beiden Platten zwischen ihnen eine Kanalstruktur entsteht. Über diese Kanalstruktur kann dann später im Betriebszustand ein Kühlmedium zum Abtransport der Reaktionswärme geleitet werden. Dabei ist es vorteilhaft, einen möglichst hohen Kühlmittelfluss zu erreichen. Mit speziell entwickeln Fertigungsmöglichkeiten werden metallische Bipolarplatten produziert, deren Kanäle besonders tief ausgeformt sind. Zusätzliche Fertigungstechniken erlauben zudem das Ausformverhältnis von Kanalbreite zu Tiefe weiter zu steigern.

Bei dieser Anfertigung einer solchen Bipolarplatte aus zwei Profilblechen ist es von besonderer Wichtigkeit, dass der elektrische Kontakt beider Teilbleche von hoher Qualität ist, d.h. die Verbindung der beiden Bleche muss entsprechend hochwertig sein. Hierzu können die beiden Metallbleche miteinander durch ein Lötmittel verbunden werden. Ein solches Verfahren ist z.B. beschrieben in der DE 10 2005 020 332 A1. Nachteilig ist hierbei einerseits, dass Lötmittel in den Bereich der Kanäle dringen und den Kühlmittelfluss behindern kann, und andererseits, dass ein Kontakt zwischen Kühlmedium und Lot entstehen kann, der zur Korrosion führen kann.

Als Alternative zum Löten ist es bekannt, die beiden Bleche miteinander zu verschweißen. Die DE 102 21 951 A1 offenbart ein solches Verfahren, bei dem die Teilbleche z.B. mittels Laserschweißen verbunden werden. Dabei werden die planaren Bereiche zwischen den Profilbereichen der Kanalstruktur als Flächen für die Schweißvorgänge genutzt. Die mit derartiger Schweißtechnik herstellbaren verschiedenen Verbindungsbahnen sind beispielsweise durchgehende, mäanderförmige, Punkt- oder Stepp-Nähte.

Besonders problematisch ist jedoch die Fertigung einer geprägten metallischen Bipolarplatte mit einer für "low cost" GDL angepassten, filigranen Kanal-Steg-Struktur. Im Wesentlichen stehen einer feineren Prägestruktur zwei Effekte entgegen: Zum einen die Forderung einer angepassten filigranen Steg-Kanal-Struktur mit deutlich reduzierter Abstandsbreite im Flussfeld, zum anderen müssen die beiden geprägten Bleche, die im Verbund die Bipolarplatte bilden, zwischen den Stegen durch Schweißen miteinander verbunden werden. Auch ist aufgrund der Anforderungen der Schweißtechnik eine Mindestkontaktfläche der beiden Bleche erforderlich, so dass der Breite der Kanäle Grenzen gesetzt sind. Weiterhin wirkt die Streckgrenze des geprägten Materiales limitierend, so auch Prägeradien, Prägetiefe, Kanal-Steg-Wiederholabstand und Umformgrad Begrenzungen für die Feinheit der Flussfeldstruktur darstellen.

Eine Optimierung läuft damit auf die Erfüllung gegensätzlicher Anforderungen an den Kanalabstand bei metallischen Bipolarplatten hinaus:
a) Forderung einer möglichst großen Abstandsbreite, um eine Schweißnaht anzubringen,
b) Forderung einer möglichst geringen Abstandsbreite, um kostenoptimierte GDL Materialien bei der MEA Herstellung einzusetzen.

Die Erfindung geht aus von dem dargelegten Stand der Technik. Ihr liegt die Aufgabe zugrunde, eine Bipolarplatte für den Einsatz in Brennstoffzellensystemen zu entwickeln, die eine hohe Kühlleistung gewährleistet und insbesondere für "low cost" GDL geeignet ist und mit vereinfachtem Fertigungsaufwand hergestellt werden kann.

Diese Aufgabe wird bei einer Bipolarplatte entsprechend dem Oberbegriff des Anspruchs 1 gelöst durch die kennzeichnenden Merkmale des Anspruchs 1. Weitere Details und vorteilhafte Ausführungsformen der erfindungsgemäßen Bipolarplatte sind Gegenstand der Unteransprüche.

Die Erfindung schlägt vor, die Teilbleche einer Bipolarplatte für eine Schweißverbindung so auszuformen, dass zwischen den Profilbereichen der Kanalführungen nur lokal kleine Flächen als Schweißzonen verbleiben. Realisiert wird dies durch eine entsprechende Geometrie der Profilausformung der Teilbleche. Dazu gehört insbesondere die Aufweitung des Kanalabstands an Stellen mit Schweißnaht auf Kosten der Stegbreite, so dass eine Schweißverbindung der beiden Platten nur in diesem Bereich ermöglicht wird, während an Stellen ohne Schweißung die Kanal-Steg-Geometrie genau auf die Erfordernisse der GDL abgestimmt werden kann.

Durch die Reduzierung der Schweißzonen auf viele Schweißpunkte bzw. kleine Schweißnähte über den Bereich der Gesamtfläche steht für die Kanäle ein größerer Flächenanteil zu Verfügung, d.h. der Kanalquerschnitt und damit der Kühlmitteldurchfluss kann erhöht werden. Zugleich wird es möglich, an allen anderen Kanalstellen die Breite des Kanalabstands zu verringern und so "low cost" GDL-Materialien mit ihren besonderen Eigenschaften einzusetzen, ohne dass die beschriebenen Nachteile eintreten. Unterstützt wird diese Eigenschaft durch eine zielgerichtete Verteilung der Schweißnähte, um mit möglichst wenigen Schweißnähten eine gute elektrische Kontaktierung mit geringem elektrischem Widerstand zu realisieren. Die Verteilung der Schweißnähte kann sich dabei u.a. auch an der Verteilung der Stromdichte orientieren, d.h. Bereiche mit hoher Stromausbeute weisen eine höhere Dichte an Schweißpunkten auf. Durch Messungen oder Simulationen können entsprechende Verteilungen optimiert werden.

Die Erfindung wird im Folgenden anhand eines bevorzugten Ausführungsbeispiels unter Bezugnahme auf die Figuren und den darin angegebenen Bezugszeichen näher erläutert.

Dabei zeigen:
- Fig. 1: Perspektiv-Ansicht einer Bipolarplatte mit Kanalstruktur und Schweißnähten nach dem Stand der Technik;
- Fig. 2: Ausschnitt einer erfindungsgemäßen Bipolarplatte.

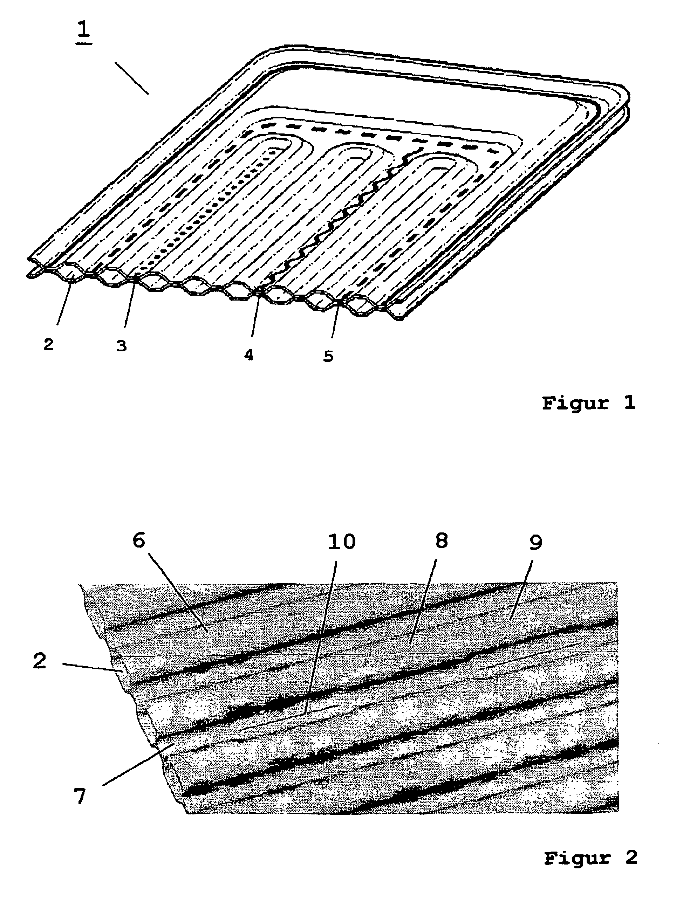

In Figur 1 ist eine bekannte Bipolarplatte (1) entsprechend Dokument DE 102 21 951 A1 wiedergegeben. Durch das korrespondierende Profil der Teilbleche werden die Kanalstrukturen (2) geformt. Die zwischen den Kanälen liegenden planaren Bereiche (3) werden als Schweißzonen verwendet. Die beiden Teilbleche werden dabei bevorzugt mittels Laserschweißtechnik sowohl über unterbrochene als auch durchgehende Schweißnähte (4, 5) miteinander verbunden.

Bei dieser Technik wird ein großer Anteil der Gesamtfläche der Bipolarplatte als Schweißfläche verwendet. Für eine Optimierung hinsichtlich Kühlleistung ist es dagegen vorteilhaft, die Kanalstrukturen möglichst dicht an dicht zu halten. Erfindungsgemäß sind daher die Bereiche für das Schweißen nur lokal zwischen den ansonsten dicht aneinander geführten Kanalstrukturen ausgeformt.

Figur 2 zeigt eine Ausführungsform der erfindungsgemäßen Bipolarplatte. Hier sind die Ausformungen (6) zur Bildung der Kanalstrukturen (2) nur durch schmale Zwischenbereiche (7) getrennt. In bestimmten Abständen sind die Ausformungen (6) der Kanalstrukturen (2) etwas verjüngt (9), so dass lokal etwas breitere flache Zonen (10) gebildet werden. In diesen Zonen können dann, beispielsweise mittels Laser, Schweißpunkte oder, wie in der Figur 2 dargestellt, kurze Schweißnähte angebracht werden. Sind als Schweißverbindung nur Punkte vorgesehen, so können die Zonen (10) sehr kurz im Verhältnis zu den anderen Profilbereichen (8) gehalten sein.

Je nach Ausführung sind beispielsweise normale (8) und verjüngte (9) Bereiche in einem etwa gleichem Abstand entlang der Kanalstruktur abwechselnd angeordnet, aber auch jede andere Verteilung der Zonen (10) kann bei der Profilausbildung der Teilplatten vorgegeben werden. Damit lassen sich viele Schweißstellen in nahezu beliebiger Anordnung über die Bipolarplatte verteilen, ohne dass eine Einschränkung der Kühlfunktion damit verbunden wäre. Zudem können auch "low cost" GDL eingesetzt werden und die Verbindungsstrukturen der Bipolarplatte gleichzeitig auch daraufhin ausgelegt werden.

In einer erweiterten Ausführungsform der erfindungsgemäßen Vorrichtung kann auch eine Kombination aus Schweißpunkten und Schweißnähten eingesetzt werden, d.h. die Zonen (10) sind dann lokal mit entsprechender Länge ausgebildet.

Die Verteilung und Art der Schweißverbindungen kann beispielsweise durch Berücksichtigung der auftretenden Stromdichteverteilung über die Bipolarplatte definiert werden. Beispielsweise können Bereiche mit hoher Reaktionsrate (Einlassbereich der frischen Reaktionsgase) eine höhere Dichte an Schweißverbindungen aufweisen, so dass hier die Übergangswiderstände besonders niedrig sind.

Die Erfindung bietet eine einfach herstellbare Bipolarplatte für Brennstoffzellen, die ein effizientes Kühlverhalten aufweist, für den Einsatz von "low cost" GDL-Materialien geeignet ist und mittels bekannter Schweißtechnik so verbunden werden kann, dass Übergangswiderstände der Stromdichteverteilung angepasst werden können.

## Patentansprüche

1. Bipolarplatte (1) für Brennstoffzellen, bestehend aus zwei Metallblechen, die korrespondierende Profile dergestalt aufweisen, dass beim Zusammenfügen der beiden Metallbleche zwischen ihnen eine Kanalstruktur (2) entsteht, wobei zwischen den Kanalstrukturen (2) planare Bereiche (3) verbleiben, die als Schweißzonen (4, 5) zum Verbinden der Metallbleche dienen,
wobei die Kanalstrukturen (2) dergestalt ausgeformt sind, dass planare Bereiche (3) nur lokal gebildet werden und die Profile nur mittels der so gebildeten, über die Bipolarplatte (1) verteilten einzelnen Schweißzonen (4, 5) verbunden sind,
und wobei die Profile durch Ausformungen (6) gebildet sind, die durch Zwischenbereiche (7) voneinander getrennt sind,
**dadurch gekennzeichnet, dass** die Ausformungen (6) im Bereich einer Schweißzone (4, 5) einen verjüngten Bereich (9) aufweisen, sodass zwischen zwei benachbarten verjüngten Bereichen (9) im Bereich der Schweißzone (4, 5) eine verbreiterte flache Zone (10) gebildet ist.

2. Bipolarplatte nach Anspruch 1,
**dadurch gekennzeichnet, dass** die verbreiterten flachen Zonen (10) nur für Punktschweiß-Verbindungen dimensioniert sind.

3. Bipolarplatte nach Anspruch 1 oder 2,
**dadurch gekennzeichnet, dass** die verbreiterten flachen Zonen (10) mit unterschiedlicher Häufung, z.B. entsprechend der Stromdichteverteilung, über die Fläche der Bipolarplatte (1) verteilt sind.

4. Bipolarplatte nach Anspruch 1, 2 oder 3,
**dadurch gekennzeichnet, dass** die Abmaße der Kanalstrukturen (2) über die Fläche der Bipolarplatte (1) variieren.

5. Verwendung einer Bipolarplatte nach einem der Ansprüche 1 bis 4 zum Aufbau einer Brennstoffzelle mit einer Gasdiffusionslage auf Vlies-, Gewebe- oder Papierbasis.

## Claims

1. Bipolar plate (1) for fuel cells, comprising two metal plates having corresponding profiles so that, as the two metal plates are joined together, a passage structure (2) is created between them, with planar regions (3) serving as welding zones (4, 5) for joining the metal plates remaining between the passage structures (2), wherein the passage structures (2) are shaped in such a way that planar regions (3) are formed only locally and the profiles are only joined by means of the individual welding zones (4, 5) thus formed and distributed over the bipolar plate (1),
and wherein the profiles are represented by shapings (6) which are separated from one another by intermediate regions (7),
**characterised in that** the shapings (6) have a tapered region (9) in the region of a welding zone (4, 5), so that a widened flat zone (10) is formed between two adjacent tapered regions (9) in the region of the welding zone (4, 5).

2. Bipolar plate according to claim 1,
**characterised in that**
the widened flat zones (10) are dimensioned only for spot-welded joints.

3. Bipolar plate according to claim 1 or 2,
**characterised in that**
the widened flat zones (10) are distributed over the surface of the bipolar plate (1) with different accumulation densities, for example corresponding to the distribution of current density across the surface of the bipolar plate (1).

4. Bipolar plate according to claim 1, 2 or 3,
**characterised in that**
the dimensions of the passage structures (2) vary across the surface of the bipolar plate (1).

5. Use of a bipolar plate according to any of claims 1 to 4 for the construction of a fuel cell with a gas diffusion layer based on non-woven fabric, woven fabric or paper.

## Revendications

1. Plaque (1) bipolaire pour piles à combustible, comprenant deux tôles métalliques qui présentent des profilés correspondants de telle sorte que l'assemblage des deux tôles métalliques permette d'obtenir une structure de canal (2) entre elles, des zones planes (3), qui servent de zones de soudure (4, 5) pour relier les tôles métalliques, demeurent entre les structures de canal (2), lesdites structures de canal (2) sont façonnées de telle sorte que des zones (3) planes soient formées uniquement à certains endroits et les profilés sont reliés uniquement au moyen de chacune des zones de soudure (4, 5) ainsi formées, réparties sur la plaque bipolaire (1), et les profilés sont formés par des profilages (6) qui sont séparés les uns des autres par des zones intermédiaires (7), **caractérisée en ce que** les profilages (6) présentent dans la région d'une zone de soudure (4, 5) une zone rétrécie de sorte qu'entre deux zones (9) rétrécies adjacentes dans la zone de soudure (4, 5) se forme une zone (10) plate élargie.

2. Plaque bipolaire selon la revendication 1, **caractérisée en ce que** les zones (10) plates, élargies sont dimensionnées uniquement pour des joints soudés par points.

3. Plaque bipolaire selon la revendication 1 ou 2, **caractérisée en ce que** les zones (10) plates, élargies avec différents empilements, par exemple selon la répartition de la densité du courant, sont réparties sur la surface de la plaque bipolaire (1).

4. Plaque bipolaire selon la revendication 1, 2 ou 3, **caractérisée en ce que** les dimensions des structures de canal (2) varient sur la surface de la plaque bipolaire (1).

5. Utilisation d'une plaque bipolaire selon l'une quelconque des revendications 1 à 4 pour la construction d'une pile à combustible avec des couches de diffusion gazeuse en non-tissé, en tissu ou papier.
